# EUROPÄISCHE PATENTANMELDUNG

(11) **EP 1 640 910 A1**
(43) Veröffentlichungstag der Anmeldung: **29.03.2006**
(21) Anmeldenummer: 04023030.2
(22) Anmeldetag: 28.09.2004
(51) Int. Cl.: G06T 5/00, G06K 9/00, H04N 1/62

(54) **Verfahren zum Erkennen von Rote-Augen-Defekten in digitalen Bilddaten von fotografischen Aufnahmen**

(71) Anmelder: AgfaPhoto GmbH, 51373 Leverkusen (DE)
(72) Erfinder: Meckes, Günter, 81477 München (DE)

(57) **Zusammenfassung**

Die Erfindung betrifft ein automatisches Verfahren zum Erkennen von Rote-Augen-Defekten in digitalen Bilddaten von fotografischen Aufnahmen. Hierbei ist für die Suche nach den Rote-Augen-Defekten eine Durchmusterung vorgeschaltet, bei der innerhalb der gesamten Aufnahme nach Makrobereichen gesucht wird. Voraussetzung für das Auftreten von Rote-Augen-Defekten in der Aufnahme ist nämlich das Vorkommen derartiger Makrobereiche. Die Durchmusterung wird hierbei auf einem Durchmusterungsgitter vorgenommen. Da die Anzahl an Gitterpunkten wesentlich geringer ist als die Anzahl an Bildpunkten der aufgenommen digitalen Bilddaten, werden die Gitterpunkte des Durchmusterungsgitters ungleichmäßig über das Bild verteilt, um eine möglichst hohe Erkennungsrate zu erzielen.

## Beschreibung

Die Erfindung betrifft ein Verfahren zum Erkennen von Rote-Augen-Defekten in fotografischen Bilddaten nach dem Oberbegriff von Anspruch 1.

Bei mit Blitzlicht fotografierten Personenaufnahmen, insbesondere mittels digitaler Kameras, kommt es immer wieder zum Auftreten von sogenannten Rote-Augen-Defekten, also roten Lichtreflexen innerhalb der Iris der aufgenommenen Person. Um diese Rote-Augen-Defekte zu vermeiden bzw. zu korrigieren gibt es verschiedene Ansätze. So gibt es viele Kameras, die vor der eigentlichen Aufnahme vorblitzen, so dass sich die Pupille der aufgenommenen Person schließt und der Rote-Augen-Defekt vermieden wird. Ferner werden Verfahren angeboten, bei denen bei einem am Monitor angezeigten Bild Rote-Augen-Defekte manuell gekennzeichnet werden und ein Korrekturprogramm diese Defekte dann korrigiert. Ferner gibt es im Bereich von Laborgeräten, welche bis zu einigen tausend Bildern pro Stunde drucken, Verfahren, bei denen derartige Rote-Augen-Defekte automatisch erkannt und korrigiert werden.

Die vorliegende Erfindung ist für Rote-Augen-Defekt-Erkennungsverfahren im Bereich von derartigen Hochleistungslaborgeräten angesiedelt. Rote-Augen-Defekt-Erkennungsverfahren in diesem Bereich müssen vor allem sehr schnell arbeiten, da durch das Erkennen und Korrigieren von Rote-Augen-Defekten im Rahmen der Bildverarbeitung die Leistung eines derartigen Hochleistungsgeräts nicht reduziert werden soll. Gleichzeitig soll die Erkennungsrate von Rote-Augen-Defekten aber möglichst hoch sein und insbesondere die Fehlerkennungsrate sehr gering.

Zu diesem Zweck wurde beispielsweise das in der EP 0 961 225 beschriebene Rote-Augen-Defekt-Erkennungsverfahren entwickelt. In dieser Schrift wird vorgeschlagen, zum Erkennen von Rote-Augen-Defekten zunächst Gebiete zu suchen, die Hauttöne aufweisen, da Rote-Augen-Defekte nur in Gesichtern von Personen zu suchen sind. Diese Hauttonregionen werden anschließend auf Gesichtsähnlichkeit hin geprüft und schließlich werden innerhalb der verbleibenden möglichen Gesichter Rote-Augen-Kandidaten gesucht. Um mögliche Rote-Augen-Kandidaten zu verifizieren, wird die Umgebung dieser Kandidaten mit Augentemplates verglichen. Dieses Verfahren ist sehr aufwändig und für den Einsatz in Hochleistungsbelichtern nicht geeignet.

Deshalb wurde in der EP 1 293 933 eine Modifikation eines derartigen Verfahrens vorgeschlagen. Um Rechenzeit zu sparen und derartige Rote-Augen-Erkennungsverfahren für Hochleistungsbelichter nutzbar zu machen, wird in dem dort beschriebenen Verfahren vorgeschlagen, einen Teil der Verfahrensschritte auf einem niedrig aufgelösten Bilddatensatz vorzunehmen. So soll beispielsweise auf diesem niedrig aufgelösten Datensatz überprüft werden, ob überhaupt Hauttöne in diesem Bild vorhanden sind, so dass ein detaillierter Rote-Augen-Suchalgorithmus auf dieses Bild anzuwenden ist. Je schneller und leistungsfähiger jedoch das Erkennungsverfahren sein soll, um so niederer muss die Auflösung des zu untersuchenden Datensatzes gewählt werden. Wird die Auflösung zu niedrig gewählt, besteht allerdings die Gefahr, dass vorhandene Hauttöne übersehen werden und deshalb in vielen Bildern die Rote-Augen-Defekte gar nicht gesucht werden. Es ist schwierig, bei dieser Lösung ein Optimum zu finden, bei dem die Bearbeitungszeit des jeweiligen Bildes möglichst gering ist, die Gefahr, dass ein Bild, das derartige Objekte aufweist, übersehen wird aber nicht zu groß wird.

Aufgabe der Erfindung war es deshalb, ein effizientes Rote-Augen-Erkennungsverfahren zu entwickeln, bei dem die Bearbeitungszeit eines Bildes möglichst gering ist, gleichzeitig aber die Erkennungsrate von Rote-Augen-Defekten möglichst hoch bleibt.

Gelöst wird diese Aufgabe durch ein Verfahren, wie es in Anspruch 1 beschrieben ist.

Die Erfindung basiert darauf, dass im Rahmen eines Rote-Augen-Defekt-Erkennungsverfahrens vor der eigentlichen Suche nach roten Augen innerhalb des zu untersuchenden Bildes nach Objekten gesucht wird, deren Vorhandensein Voraussetzung für das Auftreten von Rote-Augen-Defekten ist. Als mögliche zu suchende Objekte oder Makrobereiche für die Durchmusterung kommen Hautbereiche in Frage, es können aber auch Haare, Gesichter an sich oder aber Personen direkt z. B. mittels Objekterkennungsverfahren gesucht werden.

Um diese vorgezogene Durchmusterung möglichst effizient durchzuführen, wird ein Durchmusterungsgitter erzeugt, dessen Gitterpunkte ungleichmäßig über das Bild verteilt sind. Die Vorabsuche nach für das Auftreten von Rote-Augen-Defekten notwendigen Objekten wird anhand dieser Gitterpunkte durchgeführt. Dadurch dass die Gitterpunkte ungleichmäßig über das Bild verteilt werden, ist es möglich, das Gitter so zu gestalten, dass nur eine sehr geringe Zahl von Gitterpunkten zu untersuchen ist, gleichzeitig aber die Dichte der Gitterpunkte in Bereichen des Bildes in denen es wichtig ist vorhandene Objekte zu finden relativ hoch zu wählen. Die Erkenntnis, die dieser Erfindung zu Grunde liegt ist, dass es nicht effizient genug ist eine derartige Vorabsuche auf einem gleichmäßigen Gitter, wie es durch ein niedrig aufgelöstes Bild repräsentiert wird, vorzunehmen. Bei einem gleichmäßig über das Bild verteilten Gitter ist es nämlich sehr schwer bzw. oftmals unmöglich, einen sinnvollen Kompromiss zwischen möglichst wenigen Gitterpunkten und einer hohen Erkennungsrate zu finden. Indem ein Gitter mit nicht äquidistanten Gitterpunkten kreiert wird, kann die Sicherheit für die Erkennungsrate in den Bereichen im Bild durch eine erhöhte Anzahl von Gitterpunkten gesteigert werden, in denen eine Erkennung von Rote-Augen-Defekten besonders wichtig ist, während die Anzahl von Gitterpunkten in anderen Bereichen deutlich herabgesetzt werden kann.

Besonders vorteilhaft ist es, in bildwichtigen Bereichen ein engeres Gitter zu wählen. Bildwichtige Bereiche sind solche, denen ein Betrachter des Bildes in der Regel mehr Aufmerksamkeit zukommen lässt, als dem Rest des Bildes. Es sind die Bereiche, die die Bildinformation enthalten, die für die Aufnahme wesentlich ist, wie z. B. Bildbereiche von Portraits bei Personenaufnahmen. Diese bildwichtigen Bereiche sind auch die Bereiche, in denen dem Betrachter eines Bildes Rote-Augen-Defekte besonders negativ auffallen. Deshalb ist es vorteilhaft, in diesen Bereichen mehr Gitterpunkte vorzusehen, um dort die Gefahr ein Objekt mit Rote-Augen-Defekten bei der Korrektur zu übersehen, möglichst gering zu halten. In anderen nicht bildwichtigen Bereichen kann dagegen die Anzahl der Gitterpunkte deutlich geringer gewählt werden, da es als nicht so störend empfunden wird, in diesen Bereichen Rote-Augen-Defekte zu belassen.

Als ein besonders wichtiger Bereich im Bild hat sich der mittlere Bereich des Bildes erwiesen. Nahezu jeder, der ein Bild betrachtet, sieht zuerst in das Zentrum des Bildes. Außerdem versuchen die meisten Fotografen Gesichter, die sie aufnehmen wollen, im Mittelpunkt des Bildfeldes anzuordnen. Deshalb ist davon auszugehen, dass Rote-Augen-Defekte in Gesichtern, welche sich im Zentrum des Bildes befinden, als besonders störend empfunden werden, da die roten Augen in diesem Bereich im Allgemeinen zu Personen gehören, die dem aufnehmenden Fotografen wichtig sind. Gesichter in den peripheren Bereichen des Bildes erscheinen zumeist unwichtiger, so dass deren Fehlerhaftigkeit als weniger störend empfunden wird.

Ferner ist es vorteilhaft, im oberen Bereich des Bildes mehr Gitterpunkte vorzusehen als im unteren. Die meisten Gesichter, bei denen Rote-Augen-Defekte als störend empfunden werden, befinden sich nämlich in dem oberen Teil des Bildes.

Welcher Teil des Bildes der obere ist, wird bei neueren digitalen Kameras festgehalten und kann mit zum Bild zugehörigen Metadaten mit den Bilddaten an das Bildverarbeitungsprogramm übertragen werden.

Es können selbstverständlich auch andere Bildbereiche als bildwichtig definiert werden. Im Allgemeinen ist jedoch davon auszugehen, dass die äußersten Ränder des Bildes als weniger wichtig für das Bild empfunden werden. Somit können hier weniger Gitterpunkte verwendet werden. Dennoch sollten diese Bereiche auf jeden Fall von dem Durchmusterungsgitter überdeckt werden, da ein vollständiger Verzicht auf eine Korrektur im Randbereich nicht tragbar ist. So ist es möglich, dass sich bei manchen Aufnahmen sehr starke Rote-Augen-Defekte größerer Portraitaufnahmen am Rand des Bildes befinden. Diese werden als äußerst störend empfunden, obwohl der Rote-Augen-Defekt nicht in bildwichtigen Bereichen des Bildes liegt. Da Rote-Augen-Defekte am Rand des Bildes aber im Allgemeinen nur dann als sehr störend empfunden werden, wenn es sich um Defekte in größeren Gesichtern handelt, ist es ausreichend hier sehr wenige Gitterpunkte für die vorgezogene Durchmusterung vorzusehen.

Innerhalb der Bereiche unterschiedlicher Gitterabstände können die Gitterpunkte dann jeweils wieder äquidistant angeordnet sein. Vorteilhafter ist es jedoch, wenn die Gitterpunkte zumindest in den Bereichen engmaschigerer Gitter so angeordnet werden, dass der Abstand zwischen zwei Gitterpunkten jeweils zum Zentrum der Bereiche hin abnimmt. Zum Zentrum bildwichtiger Bereiche hin werden rote Augen zunehmend als störender empfunden. Deshalb ist es sinnvoll, zum Zentrum hin die Erkennung von Objekten, welche möglicherweise Rote-Augen-Defekte enthalten, zuverlässiger zu gestalten. Werden in der vorab vorgenommenen Durchmusterung beispielsweise Gesichter gesucht, wobei der mittlere Bildbereich als bildwichtig klassifiziert wird, so wäre es sinnvoll, ein Durchmusterungsgitter so aufzubauen, dass der Gitterabstand zum Zentrum des Bildes hin stetig abnimmt. Dadurch wäre gewährleistet, dass in den äußeren Bildbereichen möglichst wenig Gitterpunkte und damit Rechenzeit investiert wird, während im Bildzentrum aber sogar sehr kleine Gesichter auf Rote-Augen-Defekte hin untersucht werden.

Eine weitere besonders vorteilhafte Anordnung der Gitterpunkte besteht darin, die Abstände zwischen den von oben nach unten im Bild verlaufenden Gitterpunkten größer zu wählen als den Abstand der im Bild von rechts nach links verlaufenden Gitterpunkte. Da es sich bei den Makroobjekten, die vor der Rote-Augen-Erkennung gesucht werden, zumeist um Objekte handelt, deren Ausdehnung vertikal größer ist als horizontal, ist diese Anordnung der Gitterpunkte besonders vorteilhaft. Die Ausrichtung des Bildes bei der Aufnahme kann dabei wieder den bei der Aufnahme von der Kamera aufgezeichneten Metadaten übernommen werden.

Es hat sich gezeigt, dass als sinnvoller Abstand zwischen zwei benachbarten Metapunkten in den grobmaschigeren Bereichen vorteilhafterweise zwischen 2 % und 7 % der längeren Bildkante gewählt wird. Damit ergibt sich in Richtung der längeren Bildkante eine Anzahl von wenigstens 17 bis 50 Gitterpunkten. Hierdurch wird ein Mindestmaß an Trefferwahrscheinlichkeit gewährleistet, gleichzeitig aber die Bearbeitungszeit pro Bild auf ein Minimum reduziert.

Besonders vorteilhaft hat sich ein Abstand von etwa 4 % der längeren Bildkante als Abstand zwischen zwei benachbarten Gitterpunkten gezeigt. Dies entspricht einem Gitter mit wenigstens 25 Gitterpunkten entlang der längeren Bildseite.

Insbesondere für die Bearbeitung von hoch aufgelösten Bildern mit ca. 2.000 x 3.000 Bildpunkten muss das Gitter so gewählt werden, dass das Rote-Augen-Erkennungsverfahren mit einem Minimum an Rechenzeit durchgeführt werden kann. Deshalb ist es besonders vorteilhaft für diese Bilder, im Bereich der größten Gitterabstände, höchstens jeden hundertsten Bildpunkt als Gitterpunkt vorzusehen.

Vorteilhafterweise wird das Durchmusterungsgitter in Form eines Rasters realisiert. Das heißt zur Bildung des Durchmusterungsgitters wird das Bild nicht skaliert, es werden keine Bildpunkte zusammengefasst sondern es wird ein Schema festgelegt, das bestimmt, welche der vorhandenen Bildpunkte als zu untersuchende Gitterpunkte gewählt werden sollen. Dadurch bleibt das zu untersuchende Bild in seiner ursprünglichen Form erhalten und jederzeit verfügbar, obwohl nur eine sehr geringe Anzahl von Punkten bei der vorgezogenen Durchmusterung betrachtet wird. Dadurch ist gewährleistet, dass, ausgehend vom Ergebnis der Durchmusterung an jedem Gitterpunkt, jederzeit ein Zugreifen auf dem Gitterpunkt benachbarte Punkte des ursprünglichen Bildes für eine weiterführenden Analyse zur Verfügung stehen. So ist es beispielsweise möglich, dass beim Auffinden eines hautfarbigen Gitterpunktes die Bildpunkte des hoch aufgelösten Bildes in der Umgebung des Gitterpunktes sofort auf Hautfarben untersucht werden können, so dass gleich in diesem Schritt beispielsweise die Größe der hautfarbigen Bereiche um den Gitterpunkt herum mit ermittelt werden kann.

Weitere Merkmale und Vorteile der Erfindung ergeben sich aus der folgenden Beschreibung bevorzugter Ausführungsformen und Anwendungsbeispiele, wobei Bezug auf die beigefügten Zeichnungen genommen wird.

Es zeigen:
- Fig. 1: ein Flussdiagramm eines erfindungsgemäßen Rote-Augen-Erkennungs- und Korrekturverfahrens für digitale Bilddaten und
- Fig. 2 und Fig. 3: in schematisierter Darstellung, Beispiele für erfindungsgemäße Durchmusterungsgitter

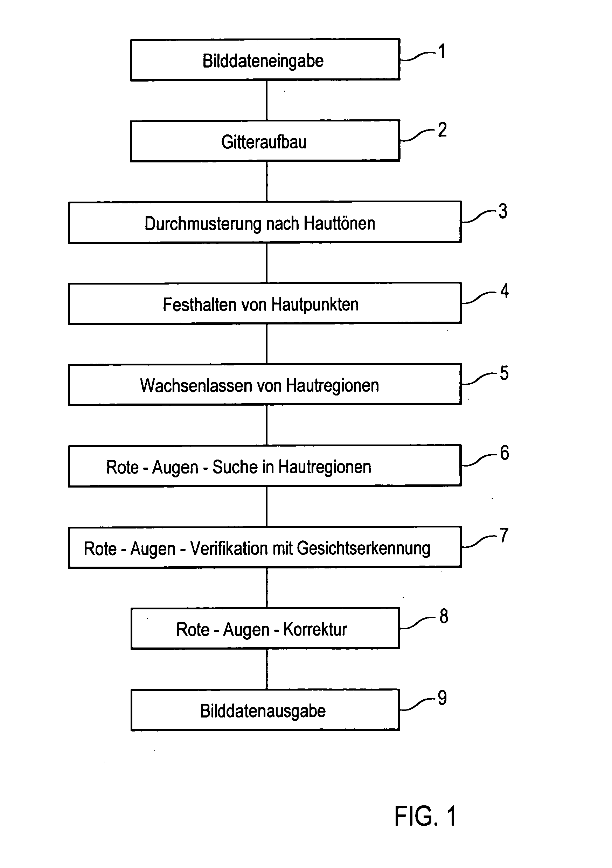

Anhand des Ablaufdiagramms der Fig. 1 werden die für eine Rote-Augen-Korrektur notwendigen Verfahrensschritte beschrieben. Im Verfahrensschritt 1 werden digitale Bilddaten, welche zu korrigieren sind, eingegeben. Die Eingabe der Bilddaten kann beispielsweise durch Abtasten eines herkömmlichen Films mittels eines digitalen Scanners erfolgen. Ebenso gut können die Bilddaten jedoch über Internet, von einer Foto-CD, der Speicherkarte einer digitalen Kamera oder beliebigen anderen Medien, welche digitale Bilddaten enthalten, zur Bearbeitung zugeführt werden. Bei den eingegebenen Bilddaten handelt es sich um digitale Daten von fotografischen Aufnahmen. Diese sollen auf Rote-Augen-Defekte hin untersucht werden, so dass beim Auftreten derartiger Defekte eine Korrektur derselben vorgenommen werden kann. Derartige Rote-Augen-Erkennungs- und Korrektur-verfahren sind beispielsweise bei digitalen Bildwiedergabegeräten in den Ablauf einer ganzen Folge von Bildkorrektur- und Verbesserungsverfahren, wie Verschärfung, Dichtekorrektur, Farbkorrekturen oder Ähnliches mit eingebunden. Sie können jedoch ebenso gut als einzelnes Verfahren beispielsweise in einer digitalen Kamera oder auf dem PC verwendet werden. Insbesondere im Zusammenhang mit Bildwiedergabegeräten aber auch bei der Verwendung in digitalen Kameras ist es sehr wichtig, dass diese Rote-Augen-Erkennungsverfahren sehr schnell und dabei mit geringer Fehlerkennungsrate arbeiten. Aus diesem Grund wird der eigentlichen Rote-Augen-Erkennung eine Durchmusterung des Bildes nach Hauttönen vorgeschaltet. Das Suchen nach Hauttönen ist einfacher als die Suche nach Rote-Augen-Defekten, da Hauttöne von Gesichtern als deutlich größere Objekte innerhalb der Bilder auftreten und außerdem eine charakteristischere Färbung aufweisen. Um ein derartiges Hauterkennungsverfahren möglichst effizient zu gestalten, wird für dieses in einem dritten Schritt durchzuführende Hautton-Erkennungsverfahren vorab in einem zweiten Bildverarbeitungsschritt ein Gitter aufgebaut, welches sich für diese spezielle Vorab-Durchmusterung als besonders vorteilhaft erwiesen hat. Dadurch, dass nicht alle Punkte des zu bearbeitenden Bildes durchsucht werden, sondern nur wohldefinierte Gitterpunkte, kann die Bearbeitungszeit für die Durchmusterung des Bildes enorm reduziert werden. Dabei besteht jedoch die Gefahr, einen Rote-Augen-Defekt, der zwischen den Gitterpunkten liegt, zu übersehen. Es hat sich jedoch gezeigt, dass es Defekte im Bild gibt, die als besonders störend empfunden werden und auch solche, die kaum relevant sind. Dies wird beim Aufbau des Gitters berücksichtigt. Durch eine besonders geschickte Wahl des Gitters ist es nämlich möglich, die Gefahr, ein als besonders störend empfundenes Rote-Augen-Paar zu übersehen, ebenso wie die Bearbeitungszeit, möglichst gering zu halten. Hierzu wird ein Gitter für die Durchmusterung aufgebaut, bei dem die Abstände zwischen den Gitterpunkten innerhalb des Bildes variieren. So werden in Bereichen, in denen es besonders wichtig ist, derartige Rote-Augen-Defekte zu erkennen, mehr Gitterpunkte angeordnet als in den Bildbereichen, in denen Rote-Augen-Defekte als weniger störend empfunden werden.

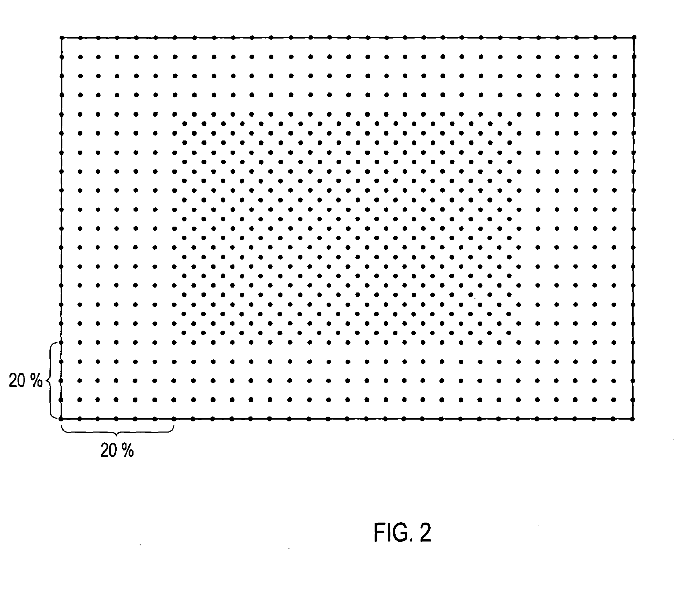

Ein einfaches Beispiel für ein derartiges Gitter ist in Fig. 2 angegeben. Hier sind die Gitterpunkte des Durchmusterungsgitters innerhalb zweier unterschiedlicher Bildbereiche unterschiedlich angeordnet. So werden im Randbereich des Bildes, der im Allgemeinen weniger wichtigen Bildinhalt zeigt, Gitterpunkte mit größerem Abstand zueinander angeordnet als im inneren Bereich des Bildes, in dem sich im Allgemeinen der Bildinhalt befindet, den der Fotograf für wichtig für diese Aufnahme empfunden hat. Im zentralen Bereich des Bildes befindet sich somit der bildwichtige Anteil. Hier ist es sinnvoll, mehr Gitterpunkte vorzusehen, da hier auch kleine Gesichter gefunden werden sollen, welche möglicherweise Rote-Augen-Defekte aufweisen können. Im Randbereich ist es dagegen nicht so tragisch, wenn sehr kleine Gesichter nicht korrigiert werden, da diese im Allgemeinen nicht zu Personen gehören, welche der Fotograf erfassen wollte. Dennoch kann das Gitter auch in diesem Bereich nicht beliebig grob gewählt werden, da Rote-Augen-Defekte in größeren Gesichtern auch dann als störend für das Bild empfunden werden, wenn sie am Rand des Bildes liegen. Ein derartiger Gitteraufbau ist zwar für viele Bearbeitungsverfahren ausreichend, allerdings weist dieses Gitter einen Sprung zwischen der Anzahl von Gitterpunkten in bildwichtigen und in bild-unwichtigen Bereichen auf. Dadurch kenn es geschehen, dass gleichgroße Gesichter im einen Bereich noch erkannt werden, im anderen aber schlagartig nicht mehr. Insbesondere ist es möglich, dass bei einem Bild mit sehr ähnlichem Bildinhalt plötzlich Gesichter mit zu korrigierenden Rote-Augen-Defekten gefunden werden, die vorher noch nicht gefunden wurden, indem ein Gesicht in einen anderen Bereich wechselt. Ein derartiges Korrekturverhalten kann dem Kunden gegenüber nur sehr schwer vermittelt werden.

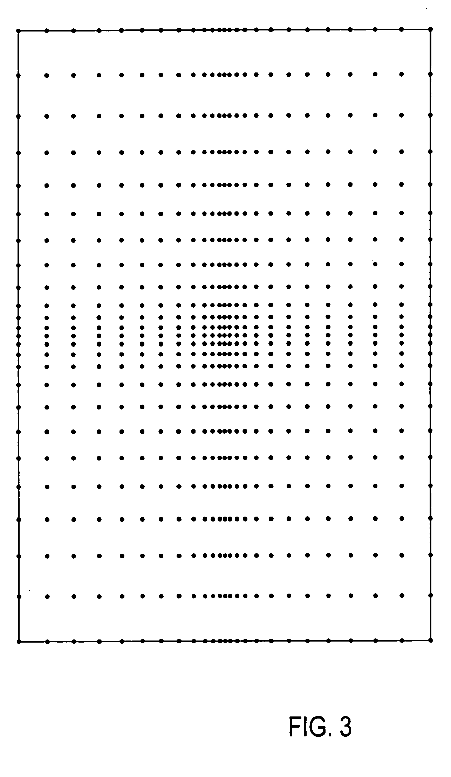

Deshalb ist es besonders vorteilhaft, ein Gitter so aufzubauen, dass die Abstände zwischen benachbarten Gitterpunkten zu dem Zentrum von bildwichtigen Bereich hin zunehmen, ohne dass dabei Sprünge entstehen. Ein Beispiel für ein derartiges Gitter ist in Fig. 3 dargestellt. Hier werden ebenfalls zentrale Bereiche des Bildes als bildwichtige Bereiche gewählt, so dass entlang der Horizontlinien möglichst enge Gitter zustande kommen. Die Gitterabstände werden mit zunehmender Nähe zu den Horizonten geringer. Ebenso gut kann aber jeder andere Ort im Bild als bildwichtig gewählt werden, genauso wie es möglich ist, mehrere bildwichtige Bereiche im Bild zu definieren. Anbieten würden sich hier auch Bereiche, die nach Gesichtspunkten gängiger Gestaltungslehren ausgewählt werden.

Die Bildung eines derartigen Gitters wird anhand von Fig. 2 erläutert. Ausgegangen wird hier beispielsweise von einem digitalen Bild mit 2.000 x 3.000 Bildpunkten. Zur Bildung des Gitters werden entlang der längeren Bildkante gleichmäßig verteilt 31 Bildpunkte als Gitterpunkt gewählt. Entland der kürzeren Bildkante wählt man hierfür gleich verteilt 21 Bildpunkte. Das heißt, zum Aufbau des Gitters wird als erster Punkt der Eckpunkt gewählt und anschließend jeder hundertste Bildpunkt. Dieses Schema wird über das gesamte Bild beibehalten, so dass immer die Eckpunkte von Kästchen der Kantenlänge 100 x 100 Bildpunkte als Gitterpunkte gewählt werden. Im inneren Bereich des Bildes, das heißt innerhalb eines Randbereichs der auf 20 % der Kantenlänge festgelegt wird, wird die Anzahl der Gitterpunkte erhöht, indem im Zentrum eines derartigen 100 x 100 Bildpunkte umfassenden Kästchens jeweils ein Bildpunkt als Gitterpunkt gewählt wird.

Diese somit zu dem Durchmusterungsgitter zugehörigen Bildpunkte innerhalb des Rote-Augen-Erkennungsverfahrens werden in dem Verfahrensschritt 3 untersucht. Dabei wird geprüft, ob die Farbe des jeweiligen zu untersuchenden Gitterpunktes der Farbe von Hauttönen entspricht. Fällt diese Untersuchung für den jeweiligen Bildpunkt positiv aus, so wird der entsprechende Bild bzw. Gitterpunkt festgehalten. Dies erfolgt in einem Verfahrensschritt 4, in dem sich schließlich ein Muster von über das Bild verteilten hautfarbenen Gitterpunkten ergibt. In einem Verfahrensschritt 5 werden diese hautfarbigen Gitterpunkte als Kristallationspunkte genommen, um von ihnen aus mit gängigen Verfahren Hautregionen wachsen zu lassen. Dies geschieht gewöhnlich dadurch, dass die nicht dem Gitter zugehörigen Bildpunkte, welche die Gitterpunkte umgeben, auf Hauttöne hin untersucht werden, wobei im Allgemeinen ein Schwellwertverfahren gewählt wird. Dadurch ergeben sich um den hautfarbigen Gitterpunkt herum Ansammlungen von hautfarbigen Bildpunkten. Innerhalb der dabei entstehenden Hauttonregionen wird in einem Verfahrensschritt 6 dann die eigentliche Suche nach Rote-Augen-Defekten vorgenommen. Hierzu werden z. B. extrem rote und intensive Bildpunkte ermittelt, die sich in einer Umgebung befinden, welche einem Auge zugeordnet werden kann. Bekannte Verfahren hierfür sind Vergleiche mit Templates, das Abprüfen von Kriterien oder andere Objekterkennungsverfahren. Sobald innerhalb einer Hautregion zwei derartige rote Objekte gefunden worden sind, wird eine Verifikation dieser Objekte als Rote-Augen-Defekte vorgenommen. Dies geschieht in einem Verfahrensschritt 7, in dem mittels eines Gesichtserkennungsverfahrens überprüft wird, ob die Hautregion, welche die roten Punkte beinhaltet, verschiedentliche Kriterien eines Gesichts erfüllt. Gleichzeitig kann dabei vorteilhafterweise plausibel gemacht werden, dass die ermittelten roten Punkte innerhalb dieses möglichen Gesichts an Augenpositionen liegen. Sobald dies bestätigt wird, wird in einem Verfahrensschritt 8 die eigentliche Rote-Augen-Korrektur vorgenommen. Dies kann beispielsweise dadurch geschehen, dass alle ermittelten roten Punkte im Bereich der Augen durch dunkle Punkte ersetzt werden. Schließlich werden in einem Schritt 9 die so bearbeiteten Bilddaten wieder ausgegeben. Für die Ausgabe sind ebenso wie für die Eingabe verschiedene Speichermedien vorstellbar, es ist aber ebenso gut möglich, dass die Bilddaten auf lichtempfindliches Wiedergabematerial ausgegeben werden, so dass beispielsweise ein Foto auf Fotopapier entsteht. Es ist aber auch vorstellbar, das Rote-Augen-Erkennungsverfahren in eine gesamte Bildbearbeitungskette einzubinden und die Bilddatenausgabe nur als Bilddatenübergabe zum nächsten Bildbearbeitungsverfahrensschritt zu realisieren. Bilddateneingabe und Bilddatenausgabe haben keinen direkten Einfluss auf das eigentliche Rote-Augen-Korrektur-verfahren.

## Patentansprüche

1. Automatisches Verfahren zum Erkennen von Rote-Augen-Defekten in digitalen Bilddaten von fotografischen Aufnahmen, wobei der Suche nach den Rote-Augen-Defekten eine Durchmusterung vorgeschaltet ist, bei der innerhalb der gesamten Aufnahme nach Makrobereichen gesucht wird, deren Vorkommen Voraussetzung für das Auftreten von Rote-Augen-Defekten in der Aufnahme ist, wobei die Durchmusterung auf einem Durchmusterungsgitter vorgenommen wird, dessen Anzahl an Gitterpunkten wesentlich geringer ist als die Anzahl an Bildpunkten der aufgenommenen digitalen Bilddaten, **dadurch gekennzeichnet, dass** die Gitterpunkte des Durchmusterungsgitters ungleichmäßig über das Bild verteilt werden.

2. Verfahren nach Anspruch 1, **dadurch gekennzeichnet, dass** das Durchmusterungsgitter in bildwichtigen Bereichen mehr Gitterpunkte aufweist.

3. Verfahren nach Anspruch 2, **dadurch gekennzeichnet, dass** der mittlere Bereich der Aufnahme als bildwichtiger Bereich gewählt wird.

4. Verfahren nach Anspruch 2, **dadurch gekennzeichnet, dass** die obere Bildhälfte als bildwichtiger Bereich gewählt wird.

5. Verfahren nach Anspruch 2, **dadurch gekennzeichnet, dass** zum Zentrum der bildwichtigen Bereiche hin zunehmend mehr Gitterpunkte angeordnet werden.

6. Verfahren nach Anspruch 1, **dadurch gekennzeichnet, dass** der Abstand der vertikal in Bild angeordneten Gitterpunkte größer gewählt wird als der Abstand der horizontal angeordneten Gitterpunkte.

7. Verfahren nach Anspruch 1, **dadurch gekennzeichnet, dass** der maximale Abstand zwischen zwei benachbarten Gitterpunkten zwischen 2 % und 7 % der längeren Bildkante des Bildes beträgt.

8. Verfahren nach Anspruch 7, **dadurch gekennzeichnet, dass** der maximale Abstand zwischen zwei benachbarten Gitterpunkten 4% der längeren Bildkante des Bildes beträgt.

9. Verfahren nach Anspruch 1, **dadurch gekennzeichnet, dass** bei einem Bild von 2000x3000 Bildpunkten in den Bereichen großer Gitterabstände höchstens jeder 100ste Bildpunkt als Gitterpunkt gewählt wird.

10. Verfahren nach Anspruch 1, **dadurch gekennzeichnet, dass** das Durchmusterungsgitter als Rasters gebildet wird, welches über die zu untersuchenden Bilddaten gelegt wird.

11. Verfahren nach Anspruch 10, **dadurch gekennzeichnet, dass** ein Teil der Bildpunkte als Rasterpunkte verwendet wird.
